# EUROPEAN PATENT SPECIFICATION

(11) **EP 4 101 749 B1**
(45) Date of publication and mention of the grant of the patent: **28.08.2024**
(21) Application number: 22176120.8
(22) Date of filing: 30.05.2022
(51) Int. Cl.: B62J 50/22

(54) **STRADDLED VEHICLE**
GRÄTSCHSITZFAHRZEUG
VÉHICULE À ENFOURCHER

(30) Priority: 01.06.2021 JP 2021092398
(43) Date of publication of application: 14.12.2022
(73) Proprietor: Yamaha Hatsudoki Kabushiki Kaisha, Iwata-shi, Shizuoka 438-8501 (JP)
(72) Inventor: MIMASA, Yoshiyasu, Iwata-shi, 4388501 (JP)
(74) Representative: Studio Torta S.p.A.

(56) References cited:
- CN-A- 112 623 082
- JP-A- 2021 066 257
- KR-B1- 101 091 574
- US-A1- 2015 158 433
- WWW ZEROMOTORCYCLES COM: "ZERO S, SR, DS 2014 OWNER'S MANUAL", 1 March 2015 (2015-03-01), XP055355482, Retrieved from the Internet <URL:https://evmc2.files.wordpress.com/2014/02/zero-owners-manual-ds_2014-final.pdf> [retrieved on 20170316]

## Description

The present invention relates to a straddled vehicle including an accessory socket.

Straddled vehicles including accessory sockets have been known in the art. An accessory socket is an electric power supply unit in the form of a socket. By inserting a plug connected to an electrical product such as a smartphone into the accessory socket, electric power can be supplied to the electrical product.

Taiwanese Patent No. I395685 discloses a scooter including an accessory socket. The scooter includes a low footrest between the seat on which the rider is seated and the handlebar. The seat is arranged rearward of the footrest, and a rear-facing cover is provided forward of the footrest. A relatively large space is ensured between the seat and the cover. There is a large space (i.e., a so-called foot rest space) between the handlebar and the seat. With the scooter disclosed in Taiwanese Patent No. I395685, the accessory socket is provided on the cover. Since a relatively large space is ensured rearward of the cover, it is easy to insert the plug into the accessory socket and to remove the plug from the accessory socket. The rider can insert and remove the plug into/from the accessory socket while straddling the seat. Even when the plug is inserted in the accessory socket, there is a space ensured for the arrangement of the cord extending from the plug.

As a form of a straddled vehicle, a straddled vehicle in which a fuel tank is arranged between the seat and the handlebar is known in the art. For example, JP2018-47868A discloses a straddled vehicle of such a form. A straddled vehicle of this type, as opposed to a scooter, does not include a rear-facing cover forward of the seat. It is not possible to provide an accessory socket on a rear-facing cover. With a straddled vehicle of this type, it is difficult to ensure a space for an accessory socket and a place at which to install the accessory socket. With the straddled vehicle disclosed in JP2018-47868A, the accessory socket is provided on a cover which is arranged leftward of the fuel tank. The rider can use the accessory socket without getting off the vehicle. The rider can use the accessory socket while straddling the seat.

With a scooter, an accessory socket can be easily arranged in the vicinity of the center in the vehicle width direction, rearward of the handlebar, or forward of the seat, in order to improve the usability. That is, an accessory socket can easily be arranged at a position such that it is easy for the rider to use the accessory socket. On the other hand, with a straddled vehicle of a type where the fuel tank is arranged between the seat and the handlebar, the fuel tank is arranged in the vicinity of the center in the vehicle width direction, rearward of the handlebar, and forward of the seat. It is difficult to arrange an accessory socket at such positions. Thus, with the straddled vehicle of JP2018-47868A, it is assumed that an accessory socket is arranged on a vehicle cover leftward of the fuel tank.

With the straddled vehicle of JP2018-47868A, when parked, the vehicle body may lean leftward with the handlebar steered to the left. If an accessory socket is arranged leftward of the fuel tank, the handlebar and the accessory socket may overlap with each other, making it difficult to insert and remove the plug.

In order to solve the problem described above, one may consider arranging an accessory socket forward relative to the handlebar. Moreover, in order to improve the usability, it is preferred to arrange an accessory socket in the vicinity of the center in the vehicle width direction, in the vicinity of the rider, and at a position such that it does not overlap with the handlebar while being steered. Therefore, one may consider arranging an accessory socket around the meter provided forward relative to the handlebar.

If an accessory socket is arranged rearward of the meter, the plug inserted in the accessory socket may interfere with the handlebar when steering the handlebar. In order to avoid such interference, one may consider arranging an accessory socket sideward or forward of the meter. However, if the accessory socket is arranged sideward or forward of the meter, the accessory socket will protrude sideward or forward, which will increase the size of the peripheral structure of the meter.

One may consider fixing an accessory socket to the meter itself and to form the insertion hole of the accessory socket on the upper surface of the meter. However, if the insertion hole of the accessory socket is formed on the upper surface of the meter, the area of the meter will be reduced by the insertion hole of the accessory socket. The document US 2015/158433 A1 discloses a straddled vehicle in accordance with the preamble of claim 1.

It is an object of the present invention to provide a type of a straddled vehicle including a fuel tank arranged between a seat and a handlebar, wherein it is possible to enable the rider to easily insert and remove a plug into/from an accessory socket while straddling the seat, while ensuring the area of a meter.

A straddled vehicle disclosed herein includes: a body frame including a head pipe; a steering shaft supported on the head pipe so that the steering shaft can rotate left and right; a handlebar fixed to the steering shaft and extending leftward and rightward; a seat arranged rearward of the handlebar; a fuel tank arranged rearward of the head pipe with at least a portion thereof arranged forward and upward of the seat; a meter arranged forward of the handlebar; and an accessory socket including an insertion hole facing rearward. The meter and the accessory socket are supported on the steering shaft so that the meter and the accessory socket rotate left and right together with the handlebar. As the vehicle is viewed from above, at least a portion of the accessory socket is arranged rearward relative to a rear end of the meter and forward relative to a front end of the handlebar.

With the straddled vehicle described above, as the vehicle is viewed from above, at least a portion of the accessory socket is arranged rearward relative to the rear end of the meter. Since the accessory socket does not protrude sideward or forward of the meter, it is possible to avoid an increase in size of the peripheral structure of the meter. As compared with a case where the accessory socket is provided on the upper surface of the meter, it is possible to ensure the area of the meter. With the straddled vehicle described above, as the vehicle is viewed from above, at least a portion of the accessory socket is arranged forward relative to the front end of the handlebar. As compared with a case where the accessory socket is arranged sideward of the fuel tank, the rider can easily insert and remove the plug while straddling the seat. It is possible to improve the usability of the accessory socket. Since the accessory socket rotates left and right together with the handlebar, the handlebar and the accessory socket do not overlap with each other when the handlebar is steered. Thus, even when the handlebar is steered, the plug can be easily inserted and removed.

As the vehicle is viewed from above, at least a portion of the insertion hole of the accessory socket may be arranged rearward relative to the rear end of the meter and forward relative to the front end of the handlebar.

The meter may include a display panel that displays at least vehicle speed and a transparent panel that covers the display panel. As the vehicle is viewed from above, the insertion hole of the accessory socket may be arranged rearward relative to a rear end of the transparent panel and forward relative to the front end of the handlebar.

Then, the area of the transparent panel is ensured, and it is possible to ensure the area of the display section of the meter.

The straddled vehicle of the invention includes: a top bridge fixed to the steering shaft; a left upper holder arranged leftward of a vehicle center line and fixing together the top bridge and the handlebar; and a right upper holder arranged rightward of the vehicle center line and fixing together the top bridge and the handlebar. The insertion hole of the accessory socket may be arranged rightward of the left upper holder and leftward of the right upper holder.

Then, the insertion hole of the accessory socket is arranged relatively central in the vehicle width direction. Thus, the rider can easily insert and remove the plug while straddling the seat. Whether an electrical product such as a smartphone is attached to a portion of the handlebar that is leftward relative to the left upper holder or attached to a portion thereof that is rightward relative to the right upper holder, the length of the cord that links together the plug inserted into the insertion hole of the accessory socket and the electrical product can be kept relatively short.

As the vehicle is viewed from above, a center of the insertion hole of the accessory socket is located on the vehicle center line.

Then, the rider can easily insert and remove the plug while straddling the seat. Whether an electrical product such as a smartphone is arranged leftward or rightward of the vehicle center line, the distance between the electrical product and the insertion hole of the accessory socket can be kept short. Thus, the length of the cord that links together the plug inserted into the insertion hole of the accessory socket and the electrical product can be kept short.

The insertion hole of the accessory socket may have an opening facing rearward and upward.

Then, the rider can easily insert the plug into the insertion hole of the accessory socket by pushing the plug forward and downward. The rider can easily remove the plug from the insertion hole of the accessory socket by pulling the plug rearward and upward.

On a vertical cross section that includes a center line of the insertion hole of the accessory socket, an rearward extension line of the center line of the insertion hole may pass upward of the handlebar.

Then, when inserting and removing the plug into/from the insertion hole of the accessory socket, the handlebar is unlikely to interfere. The rider can easily insert and remove the plug while straddling the seat.

As the vehicle is viewed from above, a rear edge of the meter may include a depressed portion that is depressed forward, a left portion located leftward of the depressed portion, and a right portion located rightward of the depressed portion. As the vehicle is viewed from above, at least a portion of the insertion hole of the accessory socket may be arranged rearward of the depressed portion, forward and rightward of the left portion, and forward and leftward of the right portion.

Then, the accessory socket and the meter can be arranged in a compact arrangement.

The meter may include a switch arranged leftward or rightward of the depressed portion as the vehicle is viewed from above. As the vehicle is viewed from above, a front end of the insertion hole of the accessory socket may be located forward relative to a rear end of the switch, and a rear end of the insertion hole of the accessory socket may be located rearward relative to a front end of the switch.

Then, the insertion hole of the accessory socket and the switch of the meter can be arranged in a compact arrangement.

According to the invention: a center line direction of the insertion hole of the accessory socket, the insertion hole is to be arranged forward of the center line direction relative to a rear end of the meter in the center line direction.

Then, when the plug is attached to the insertion hole of the accessory socket along the center line direction of the insertion hole, it is possible to reduce the amount of rearward protrusion of the plug. The plug can be arranged in a compact arrangement. When the rider looks at the meter, the plug is unlikely to interfere.

The straddled vehicle may include a stay that is fixed to the steering shaft and rotates left and right together with the steering shaft. The accessory socket may be attached to the stay.

Then, when steering the handlebar, the accessory socket rotates left and right about the steering shaft together with the handlebar. When an electrical product such as a smartphone is attached to the handlebar, the relative positional relationship between the electrical product and the accessory socket does not change. Therefore, when steering, the cord that links together the plug and the electrical product is unlikely to interfere.

The meter may be attached to the stay.

Then, both of the accessory socket and the meter can be supported on a common stay.

According to the present invention, there is provided a type of a straddled vehicle including a fuel tank arranged between a seat and a handlebar, wherein it is possible to enable the rider to easily insert and remove a plug into/from an accessory socket while straddling the seat, while ensuring the area of a meter.
FIG. **1** is a left side view showing a motorcycle according to an embodiment.
FIG. **2** is a left side view showing a portion of the motorcycle.
FIG. **3** is a plan view showing a portion of the motorcycle.
FIG. **4** is an enlarged plan view showing a portion of the motorcycle.
FIG. **5** is a cross-sectional view taken along line V-V of FIG. **4****.**
FIG. **6** is a plan view showing a portion of the motorcycle, showing an example of how an accessory socket is used.

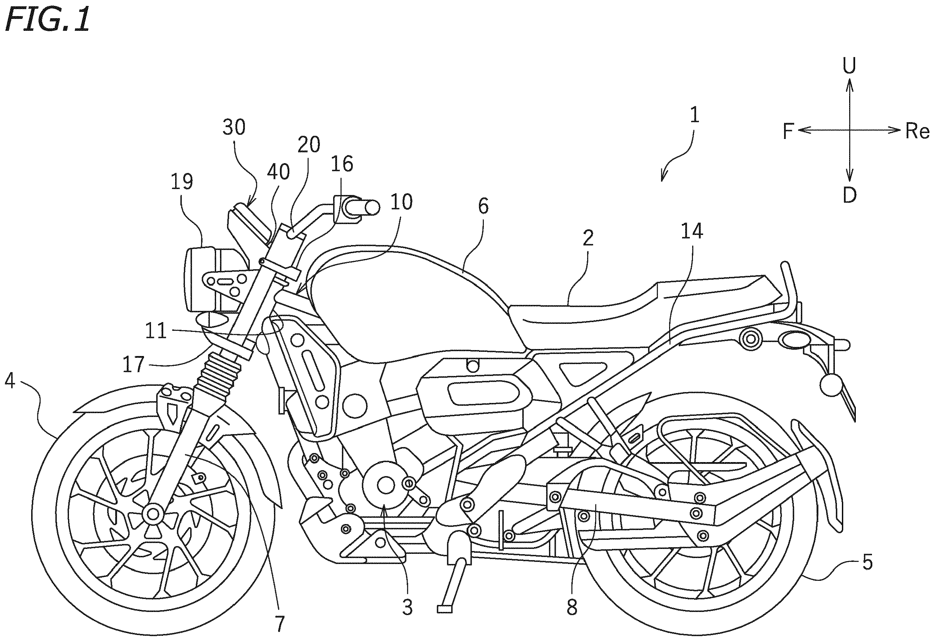

An embodiment will now be described with reference to the drawings. FIG. **1** is a left side view of a motorcycle **1**, which is an example of the straddled vehicle.

The terms front, rear, left, right, up and down, as used in the description below, refer to these directions as viewed from a virtual rider seated on a seat **2** while the motorcycle **1** is standing upright on a horizontal surface with no rider and no load thereon, unless specified otherwise. The designations F, Re, L, R, U and D, as used in the figures, refer to front, rear, left, right, up and down, respectively.

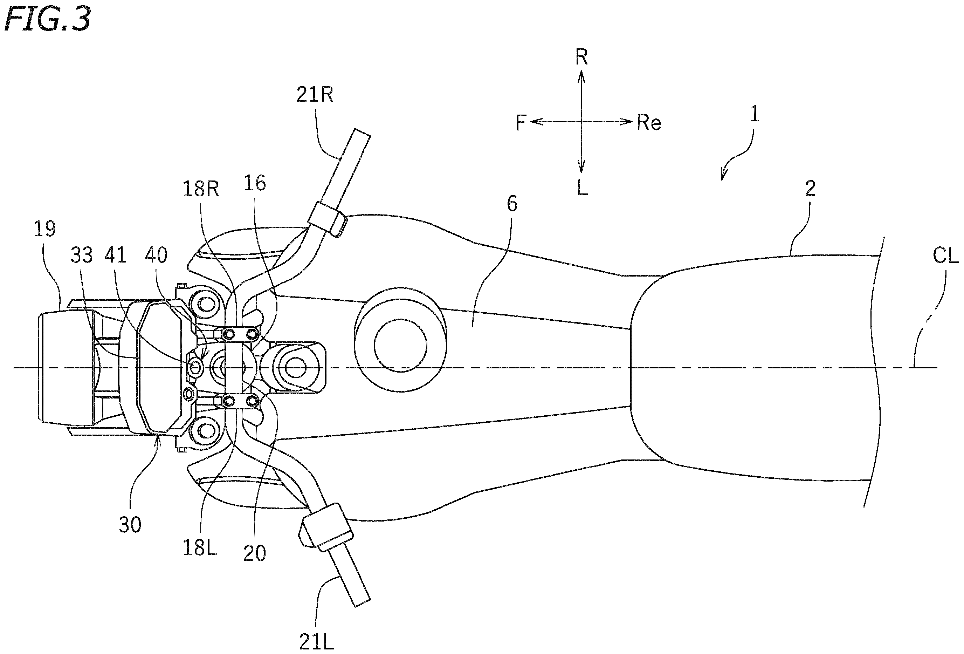

The term "forward" refers not only to the direction that extends horizontally in the front direction along the vehicle center line **CL** (see FIG. **3**), but also to directions that are inclined from that direction by an angle that is less than 90 degrees. The term "rearward" refers not only to the direction that extends horizontally rearward along the vehicle center line **CL**, but also to directions that are inclined from that direction by an angle that is less than 90 degrees. The term "leftward" refers not only to the direction that extends horizontally leftward along a line that is vertical to the vehicle center line **CL**, but also to directions that are inclined from that direction by an angle that is less than 90 degrees. The term "rightward" refers not only to the direction that extends horizontally rightward along a line that is vertical to the vehicle center line **CL**, but also to directions that are inclined from that direction by an angle that is less than 90 degrees. The term "upward" refers not only to the direction that extends upward along the vertical line, but also to directions that are inclined from that direction by an angle that is less than 90 degrees. The term "downward" refers not only to the direction that extends downward along the vertical line, but also to directions that are inclined from that direction by an angle that is less than 90 degrees.

The motorcycle **1** includes a body frame **10**, a drive source **3**, which is an internal combustion engine, a front wheel **4**, a rear wheel **5**, a seat **2**, a fuel tank **6**, a meter **30**, and an accessory socket **40** (see FIG. **3**).

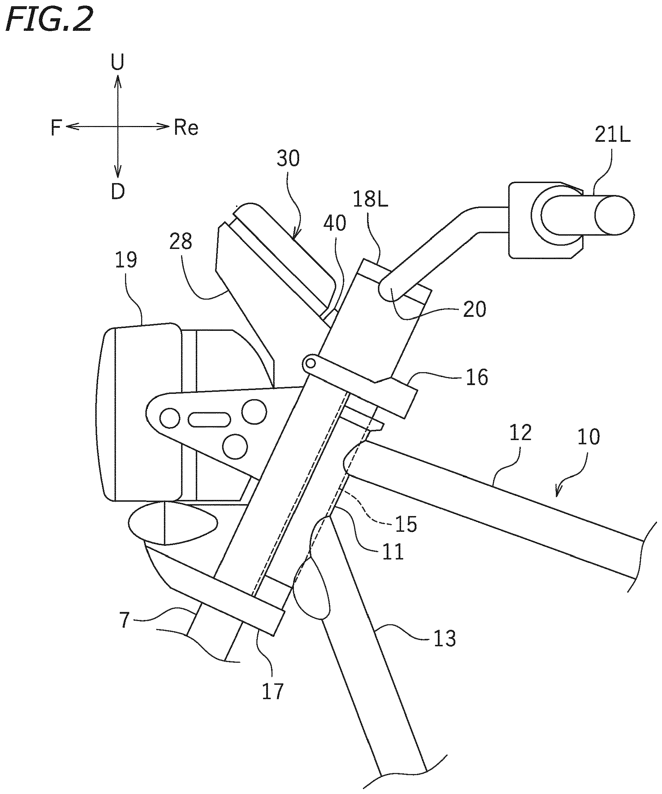

FIG. **2** is a left side view showing a portion of the motorcycle **1.** The body frame **10** includes a head pipe **11**, a main frame **12** extending rearward from the head pipe **11**, a down frame **13** extending rearward and downward from the head pipe **11**, and a seat frame **14** (see FIG. **1**) supporting the seat **2.**

A steering shaft **15** is supported on the head pipe **11** so that the steering shaft **15** can rotate left and right. A top bridge **16** is fixed to an upper portion of the steering shaft **15.** A bottom bridge **17** is fixed to a lower portion of the steering shaft **15.** As shown in FIG. **1**, the motorcycle **1** is a motorcycle of a so-called naked type, and does not include a front cowl that covers the front side, the left side and the right side of the head pipe **11.**

FIG. **3** is a plan view showing a portion of the motorcycle **1.** A handlebar **20** is fixed to the top bridge **16** by a left upper holder **18L** and a right upper holder **18R.** The left upper holder **18L** is arranged leftward of the vehicle center line **CL.** The right upper holder **18R** is arranged rightward of the vehicle center line **CL.** The handlebar **20** extends leftward and rightward. A left grip **21L** is provided on the left end portion of the handlebar **20.** A right grip **21R** is provided on the right end portion of the handlebar **20.**

As shown in FIG. **2**, the meter **30** is arranged forward of the handlebar **20.** The detailed structure of the meter **30** will be described below. A headlight **19** is arranged forward of the head pipe **11.**

As shown in FIG. **1**, a front fork **7** is fixed to the top bridge **16** and the bottom bridge **17.** The front fork **7** extends forward and downward. The front wheel **4** is rotatably supported on the lower end portion of the front fork **7.**

The rear wheel **5** is rotatably supported on the rear end portion of a rear arm **8.** The front end portion of the rear arm **8** is connected to the body frame **10** by a pivot shaft (not shown). The rear arm **8** is supported on the body frame **10** so that the rear arm **8** can swing up and down. The drive source **3** is supported on the body frame **10.** The drive source **3** and the rear wheel **5** are linked together by a power transmission member (not shown) such as a chain.

The fuel tank **6** and the seat **2** are supported on the body frame **10.** The fuel tank **6** and the seat **2** are arranged upward of the drive source **3.** The fuel tank **6** is arranged forward of the seat **2.** At least a portion of the fuel tank **6** is arranged forward and upward of the seat **2.** With the motorcycle **1**, as opposed to a scooter-type motorcycle, the fuel tank **6** is arranged between the handlebar **20** and the seat **2**, and there is no extra space rearward of the handlebar **20.**

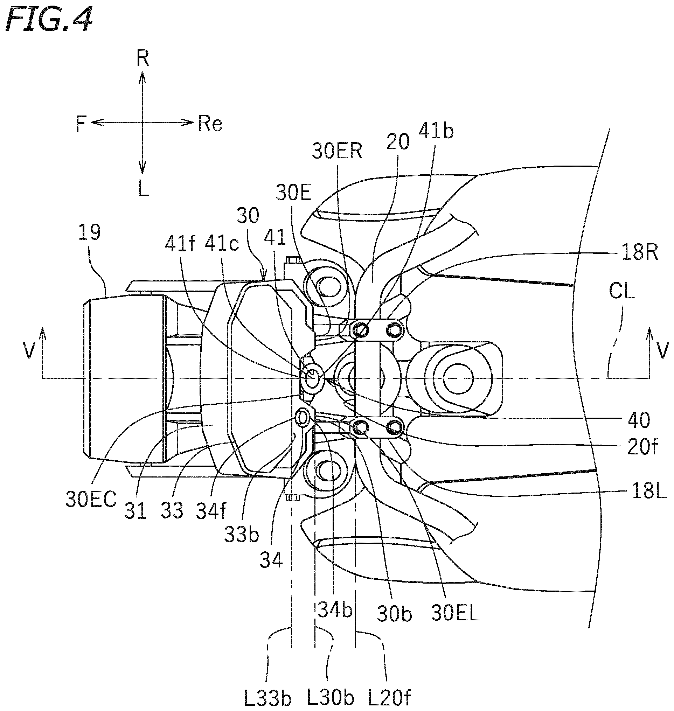

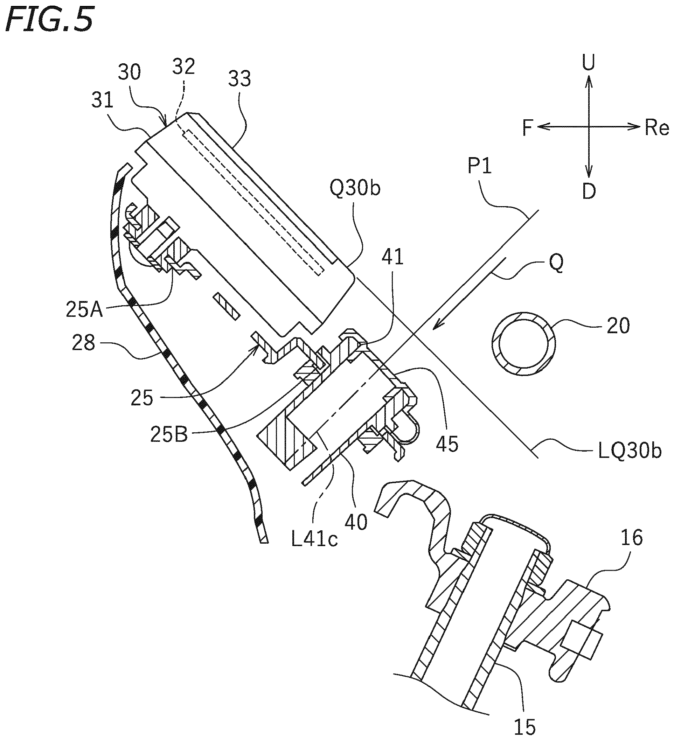

FIG. **4** is an enlarged plan view showing a portion of the motorcycle **1.** FIG. **5** is a cross-sectional view taken along line V-V of FIG. **4****.** As shown in FIG. **5**, the meter **30** includes a case **31**, a display panel **32** arranged inside the case **31**, and a transparent panel **33** fixed to the case **31.** The display panel **32** is configured to display the vehicle speed, the amount of fuel remaining, etc. The transparent panel **33** covers the display panel **32.** The transparent panel **33** is made of a transparent resin material, for example. The transparent panel **33** forms at least a portion of the upper surface of the meter **30.**

As shown in FIG. **4**, as the vehicle is viewed from above, the central portion of a rear edge **30E** of the meter **30** is depressed facing forward. As the vehicle is viewed from above, the rear edge **30E** of the meter **30** includes a depressed portion **30EC** that is depressed forward, a left portion **30EL** located leftward of the depressed portion **30EC**, and a right portion **30ER** located rightward of the depressed portion **30EC.** As the vehicle is viewed from above, the meter **30** includes a switch **34** arranged leftward of the depressed portion **30EC.** As the vehicle is viewed from above, the switch **34** is arranged rearward of the transparent panel **33.** The switch **34** is arranged at such a position that it can be easily operated by the rider.

The motorcycle **1** includes the accessory socket **40.** The accessory socket **40** includes an insertion hole **41** facing rearward.

The straight line **L30b** shown in FIG. **4** is a straight line that extends left and right passing through a rear end **30b** of the meter **30** as the vehicle is viewed from above. The straight line **L20f** is a straight line that extends left and right passing through a front end **20f** of the handlebar **20** as the vehicle is viewed from above. In a vehicle plan view, at least a portion of the accessory socket **40** is arranged rearward relative to the rear end **30b** of the meter **30** and forward relative to the front end **20f** of the handlebar **20.** Here, as the vehicle is viewed from above, at least a portion of the insertion hole **41** of the accessory socket **40** is arranged rearward relative to the rear end **30b** of the meter **30** and forward relative to the front end **20f** of the handlebar **20.**

The straight line **L33b** is a straight line that extends left and right passing through a rear end **33b** of the transparent panel **33** as the vehicle is viewed from above. As the vehicle is viewed from above, the insertion hole **41** of the accessory socket **40** is arranged rearward relative to the rear end **33b** of the transparent panel **33** and forward relative to the front end **20f** of the handlebar **20.** A front end **41f** of the insertion hole **41** is located forward relative to a rear end **34b** of the switch **34.** A rear end **41b** of the insertion hole **41** is located rearward relative to a front end **34f** of the switch **34.** That is, the insertion hole **41** of the accessory socket **40** and the switch **34** of the meter **30** partially overlap with each other for their positions in the vehicle front-rear direction.

The accessory socket **40** is arranged rightward of the left upper holder **18L** and leftward of the right upper holder **18R.** The insertion hole **41** of the accessory socket **40** is arranged rightward of the left upper holder **18L** and leftward of the right upper holder **18R.** As the vehicle is viewed from above, the center **41c** of the insertion hole **41** of the accessory socket **40** is located on the vehicle center line **CL.**

As shown in FIG. **5**, the insertion hole **41** of the accessory socket **40** has an opening facing rearward and upward. Note that reference sign **45** denotes a cap that is fitted into the insertion hole **41** of the accessory socket **40.** The cap **45** is removably attached to the insertion hole **41.** When the accessory socket **40** is used, the cap **45** is removed from the insertion hole **41.** The cross section shown in FIG. **5** is a vertical cross section, including the center line **L41c**, of the insertion hole **41** of the accessory socket **40.** As shown in FIG. **5**, on the vertical cross section, the rearward extension line **P1** of the center line **L41c** of the insertion hole **41** passes upward of the handlebar **20.**

In FIG. **5**, the arrow **Q** represents the forward side of the center line direction of the insertion hole **41** of the accessory socket **40.** The straight line **LQ33b** is a line that passes through a rear end **Q30b** of the meter **30** in the center line direction of the insertion hole **41** and is perpendicular to the center line direction of the insertion hole **41.** As shown in FIG. **5**, for the center line direction of the insertion hole **41** of the accessory socket **40**, the insertion hole **41** is arranged forward relative to the rear end **Q30b** of the meter **30** in the center line direction. For the center line direction, the insertion hole **41** is arranged forward relative to the rear end **Q30b** of the meter **30.** For the center line direction, a space is ensured rearward of the insertion hole **41.**

As shown in FIG. **5**, the motorcycle **1** includes a stay **25** that supports the meter **30** and the accessory socket **40.** The stay **25** is fixed to the steering shaft **15.** The meter **30** and the accessory socket **40** are supported on the steering shaft **15** via the stay **25** so that the meter **30** and the accessory socket **40** can rotate left and right together with the handlebar **20.** Here, the stay **25** is fixed to the steering shaft **15** via a bracket (not shown) and the top bridge **16** or the bottom bridge **17.** The stay **25** is configured to rotate left and right together with the steering shaft **15.** The stay **25** includes a first attachment portion **25A** to which the meter **30** is attached, and a second attachment portion **25B** to which the accessory socket **40** is attached. The meter **30** and the accessory socket **40** are each attached to the same stay **25.** The accessory socket **40** is not directly attached to the meter **30.** Note that reference sign **28** denotes a cover that covers the front side of the meter **30**, the front side of the accessory socket **40** and the front side of the stay **25.**

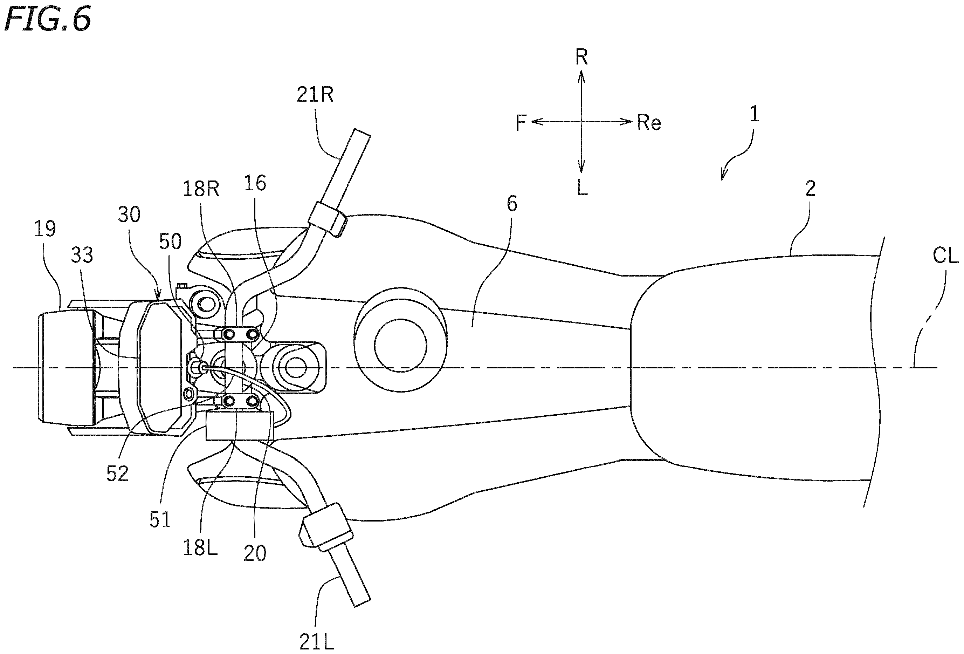

FIG. **6** is a plan view showing an example of how the accessory socket **40** is used. A portion of the handlebar **20** that is leftward of the left upper holder **18L** or a portion thereof that is rightward of the right upper holder **18R** are suitable for the attachment of an electrical product such as a smartphone. In this practical example, a smartphone **51 is** attached to the portion of the handlebar **20** that is leftward of the left upper holder **18L.** The rider can easily operate the smartphone **51** and easily see the smartphone **51** while straddling the seat **2.** A plug **50**, which is inserted in the accessory socket **40**, and the smartphone **51** are connected together by a cord **52.** Electric power is supplied to the smartphone **51** from the accessory socket **40.**

The motorcycle **1** is configured as described above. Next, various advantageous effects of the motorcycle **1** according to the present embodiment will be described.

As opposed to a scooter, the motorcycle **1** according to the present embodiment is a motorcycle of a type where the fuel tank **6** is arranged between the seat **2** and the handlebar **20.** It is difficult to arrange the accessory socket **40** between the seat **2** and the handlebar **20.** The meter **30** is arranged forward of the handlebar **20.** In view of this, one may consider arranging the accessory socket **40** sideward or forward of the meter **30.** In such a case, however, the accessory socket **40** will protrude sideward or upward relative to the meter **30.** This will increase the size of the peripheral structure of the meter **30.** One may consider forming the insertion hole **41** of the accessory socket **40** on the upper surface of the meter **30** and directly attach the accessory socket **40** to the meter **30.** However, if the insertion hole **41** of the accessory socket **40** is formed on the upper surface of the meter **30**, the area of the meter **30** will be reduced by the insertion hole **41.** Note that when the insertion hole **41** of the accessory socket **40** is formed on the upper surface of the meter **30**, the entirety of the accessory socket **40** will be arranged forward relative to the rear end **30b** of the meter **30** as the vehicle is viewed from above.

On the other hand, according to the present embodiment, at least a portion of the accessory socket **40** is arranged rearward relative to the rear end **30b** of the meter **30** as the vehicle is viewed from above (see FIG. **4**). Thus, as compared with a case where the insertion hole **41** of the accessory socket **40** is formed on the upper surface of the meter **30**, it is possible to ensure the area of the upper surface of the meter **30.** Thus, it is possible to ensure the display section of the meter **30.** According to the present embodiment, at least a portion of the accessory socket **40** is arranged forward relative to the front end **20f** of the handlebar **20** as the vehicle is viewed from above. Thus, the rider can easily insert and remove the plug **50** into/from the accessory socket **40** while straddling the seat **2.** It is possible to improve the usability of the accessory socket **40.**

According to the present embodiment, the accessory socket **40** rotates left and right together with the handlebar **20.** When steering the handlebar **20**, the handlebar **20** and the accessory socket **40** do not overlap with each other. Therefore, even when the handlebar **20** is steered, the plug **50** can be easily inserted and removed.

The handlebar **20** is a portion suitable for the attachment of an electrical product such as the smartphone **51.** According to the present embodiment, it is possible to arrange the accessory socket **40** at a position suitable for supplying electric power to the electrical product attached to the handlebar **20.**

According to the present embodiment, as the vehicle is viewed from above, the insertion hole **41** of the accessory socket **40** is arranged rearward relative to the rear end **33b** of the transparent panel **33** of the meter **30** and forward relative to the front end **20f** of the handlebar **20.** Even though the insertion hole **41** of the accessory socket **40** is arranged forward of the handlebar **20**, it is possible to ensure the area of the transparent panel **33.** Thus, it is possible to ensure the area of the display section of the meter **30.**

According to the present embodiment, the insertion hole **41** of the accessory socket **40** is arranged rightward of the left upper holder **18L** and leftward of the right upper holder **18R.** The insertion hole **41** of the accessory socket **40** is arranged relatively central in the vehicle width direction. Particularly, according to the present embodiment, the center **41c** of the insertion hole **41** of the accessory socket **40** is located on the vehicle center line **CL** as the vehicle is viewed from above. Thus, the rider can easily insert and remove the plug **50** into/from the accessory socket **40** while straddling the seat **2.** Whether the left hand or the right hand is used, the rider can easily insert and remove the plug **50** into/from the accessory socket **40.** Whether the rider is right-handed or left-handed, the rider can easily insert and remove the plug **50** into/from the accessory socket **40.**

The position where an electrical product such as the smartphone **51** is installed varies among riders. According to the present embodiment, whether an electrical product is installed leftward or rightward of the vehicle center line **CL**, the distance between the electrical product and the accessory socket **40** can be relatively short. Thus, the length of the cord **52** connecting together the plug **50** and the electrical product can be kept short. Whether the electrical product is arranged leftward or rightward of the vehicle center line **CL**, a short cord **52** will be sufficient. Therefore, it is possible to enhance the degree of layout freedom for an electrical product.

As shown in FIG. **5**, the insertion hole **41** of the accessory socket **40** has an opening facing rearward and upward. The rider can easily insert the plug **50** into the insertion hole **41** of the accessory socket **40** by pushing the plug **50** forward and downward. The rider can easily remove the plug **50** from the insertion hole **41** of the accessory socket **40** by pulling the plug **50** rearward and upward.

As shown in FIG. **5**, on the vertical cross section passing through the center line **L41c** of the insertion hole **41** of the accessory socket **40**, the rearward extension line **P1** of the center line **L41c** of the insertion hole **41** passes upward of the handlebar **20.** Therefore, when inserting and removing the plug **50** into/from the insertion hole **41** of the accessory socket **40**, the handlebar **20** is unlikely to interfere. The rider can easily insert and remove the plug **50** into/from the accessory socket **40** while straddling the seat **2.**

Now, as the vehicle is viewed from above, only a small space is ensured between the meter **30** and the handlebar **20.** According to the present embodiment, however, as shown in FIG. **4**, the rear edge **30E** of the meter **30** includes the depressed portion **30EC** that is depressed forward as the vehicle is viewed from above. Then, at least a portion of the insertion hole **41** of the accessory socket **40** is arranged rearward of the depressed portion **30EC**, forward and rightward of the left portion **30EL**, and forward and leftward of the right portion **30ER** as the vehicle is viewed from above. As the vehicle is viewed from above, at least a portion of the insertion hole **41** overlaps with the meter **30** for their positions in the vehicle front-rear direction. Thus, although only a small space is ensured between the meter **30** and the handlebar **20**, the accessory socket **40** can be arranged in a compact arrangement in that space. The accessory socket **40** and the meter **30** can be arranged in a compact arrangement.

As shown in FIG. **4**, as the vehicle is viewed from above, the front end **41f** of the insertion hole **41** of the accessory socket **40** is located forward relative to the rear end **34b** of the switch **34** of the meter **30**, and the rear end **41b** of the insertion hole **41** is located rearward relative to the front end **34f** of the switch **34.** Thus, the insertion hole **41** of the accessory socket **40** and the switch **34** of the meter **30** can be arranged in a compact arrangement.

As shown in FIG. **5**, for the center line direction of the insertion hole **41** of the accessory socket **40**, the insertion hole **41** is arranged forward of the center line direction, relative to the rear end **Q30b** of the meter **30** in the center line direction. Therefore, when the plug **50** is attached to the insertion hole **41** of the accessory socket **40** along the center line direction of the insertion hole **41**, it is possible to reduce the amount of rearward protrusion of the plug **50.** The plug **50** can be arranged in a compact arrangement. When the rider looks at the meter **30**, the plug **50** is unlikely to interfere. It is possible to ensure the visibility of the meter **30.** When operating the switch **34**, the plug **50** is unlikely to interfere.

According to the present embodiment, the accessory socket **40** is attached to the stay **25**, which rotates left and right together with the handlebar **20.** When steering the handlebar **20**, the accessory socket **40** rotates left and right about the steering shaft **15** together with the handlebar **20.** When an electrical product such as the smartphone **51** is attached to the handlebar **20**, the relative positional relationship between the electrical product and the accessory socket **40** does not change. Therefore, the cord **52** that links together the plug **50** and the electrical product will not be pulled when steering. Where the cord **52** is pulled when steering, there is a need to give margin for the length of the cord **52** in advance. According to the present embodiment, however, there is no need to give margin for the length of the cord **52.** It is possible to shorten the length of the cord **52.** The cord **52** is unlikely to interfere when steering.

According to the present embodiment, both of the meter **30** and the accessory socket **40** are attached to the stay **25.** Both of the accessory socket **40** and the meter **30** are supported on a common stay **25.**

While one embodiment has been described above, the embodiment is merely an example. Various other embodiments are possible.

The drive source **3** is not limited to an internal combustion engine. The drive source **3** may be an electric motor, for example.

In the embodiment described above, as the vehicle is viewed from above, only a portion of the accessory socket **40** is arranged rearward relative to the rear end **30b** of the meter **30** and forward relative to the front end **20f** of the handlebar **20.** As the vehicle is viewed from above, only a portion of the insertion hole **41** of the accessory socket **40** is arranged rearward relative to the rear end **30b** of the meter **30** and forward relative to the front end **20f** of the handlebar **20.** Note however that there is no limitation thereto. As the vehicle is viewed from above, the entirety of the accessory socket **40** may be arranged rearward relative to the rear end **30b** of the meter **30** and forward relative to the front end **20f** of the handlebar **20.** As the vehicle is viewed from above, the entirety of the insertion hole **41** of the accessory socket **40** may be arranged rearward relative to the rear end **30b** of the meter **30** and forward relative to the front end **20f** of the handlebar **20.**

There is no particular limitation on the shape of the transparent panel **33** of the meter **30.** As the vehicle is viewed from above, at least a portion of the insertion hole **41** of the accessory socket **40** may be arranged forward relative to the rear end of the transparent panel **33.**

The center **41c** of the insertion hole **41** of the accessory socket **40** may be located leftward or rightward of the vehicle center line **CL** as the vehicle is viewed from above. As the vehicle is viewed from above, the center **41c** of the insertion hole **41** may be located leftward of the vehicle center line **CL** and rightward of the left upper holder **18L**, or may be located rightward of the vehicle center line **CL** and leftward of the right upper holder **18R.** The insertion hole **41** may be arranged leftward of the left upper holder **18L**, and may be arranged rightward of the right upper holder **18R.**

As long as the handlebar **20**, etc., do not interfere, the insertion hole **41** of the accessory socket **40** may have a horizontal opening or may have an opening facing rearward and downward. As long as the handlebar **20** does not interfere, the rearward extension line **P1** of the center line **L41c** of the insertion hole **41** may overlap with the handlebar **20** or may pass downward of the handlebar **20**, on a vertical cross section that includes the center line **L41c** of the insertion hole **41** of the accessory socket **40.**

There is no particular limitation on the shape of the meter **30.** The rear edge **30E** of the meter **30** does not need to include the depressed portion **30EC** that is depressed forward as the vehicle is viewed from above. The insertion hole **41** of the accessory socket **40** may be arranged rearward of the rear edge **30E** of the meter **30** as the vehicle is viewed from above.

The insertion hole **41** of the accessory socket **40** does not need to be arranged at a position partially overlapping with the switch **34** for the vehicle front-rear direction as the vehicle is viewed from above. The meter **30** does not need to include the switch **34.**

For the center line direction of the insertion hole **41** of the accessory socket **40**, the insertion hole **41** may be located at the same position as the rear end **Q30b** of the meter **30** in the center line direction, or may be arranged rearward of the center line direction relative to the rear end **Q30b.**

The meter **30** and the accessory socket **40** do not need to be attached to a common stay **25.** The stay to which the meter **30** is attached and the stay to which the accessory socket **40** is attached may be separate from each other.

An electrical product such as the smartphone **51** may be attached to a portion of the handlebar **20** that is rightward of the left upper holder **18L** and leftward of the right upper holder **18R.** The component to which the electrical product is attached is not limited to the handlebar **20.**

There is no particular limitation on the shape and the structure of the accessory socket **40** and the plug **50.** The cord **52** may be integrally connected to the plug **50**, which is inserted into the accessory socket **40**, or the cord **52** may be removably connected thereto. For example, the plug **50** may include a connection port (a USB port to which a USB terminal is connected). Alternatively, a plug that has a connection port may be formed integral with the accessory socket **40.**

A straddled vehicle refers to a vehicle that is straddled by a rider. The straddled vehicle is not limited to the motorcycle **1.** The straddled vehicle may be an auto tricycle, an ATV (All Terrain Vehicle), or a snowmobile, for example.

### Reference Signs List

1: Motorcycle (straddled vehicle), 2: Seat, 6: Fuel tank, 10: Body frame, 11: Head pipe, 15: Steering shaft, 16: Top bridge, 18L: Left upper holder, 18R: Right upper holder, 20: Handlebar, 25: Stay, 30: Meter, 30E: Rear edge of meter, 30EC: Depressed portion of rear edge of meter, 30EL: Left portion of rear edge of meter, 30ER: Right portion of rear edge of meter, 32: Display panel, 33: Transparent panel, 34: Switch, 40: Accessory socket, 41: Insertion hole

## Claims

1. A straddled vehicle **(1)** comprising:
a body frame **(10)** including a head pipe **(11)**;
a steering shaft **(15)** supported on the head pipe **(11)** so that the steering shaft **(15)** can rotate left and right;
a handlebar **(20)** fixed to the steering shaft **(15)** and extending leftward and rightward;
a seat **(2)** arranged rearward of the handlebar **(20);**
a fuel tank **(6)** arranged rearward of the head pipe **(11)** with at least a portion thereof arranged forward and upward of the seat **(2)**;
a meter **(30)** arranged forward of the handlebar **(20)**; and
an accessory socket **(40)** including an insertion hole **(41)** facing rearward, wherein:
the meter **(30)** and the accessory socket **(40)** are supported on the steering shaft **(15)** so that the meter **(30)** and the accessory socket **(40)** rotate left and right together with the handlebar **(20)**;
as the vehicle is viewed from above, at least a portion of the accessory socket **(40)** is arranged rearward relative to a rear end **(30b)** of the meter **(30)** and forward relative to a front end **(20f)** of the handlebar (**20**), and
the straddled vehicle **(1)** comprises:
a top bridge **(16)** fixed to the steering shaft (**15**);
a left upper holder **(18L)** arranged leftward of a vehicle center line **(CL)** and fixing together the top bridge (**16**) and the handlebar (**20**); and
a right upper holder (**18R**) arranged rightward of the vehicle center line **(CL)** and fixing together the top bridge **(16)** and the handlebar (**20**), wherein
the insertion hole (**41**) of the accessory socket (**40**) is arranged rightward of the left upper holder **(18L)** and leftward of the right upper holder (**18R**);
**characterized in that**, for a direction of a center line (L41c) of the insertion hole **(41)** of the accessory socket **(40)**, the insertion hole **(41)** is arranged forward in a direction of the center line (L41c) relative to a rear end (**Q30b**) of the meter (**30**) in the center line (L41c) direction.

2. The straddled vehicle (**1**) according to claim 1, wherein as the vehicle is viewed from above, at least a portion of the insertion hole (**41**) of the accessory socket (**40**) is arranged rearward relative to the rear end (**30b**) of the meter (**30**) and forward relative to the front end (**20f**) of the handlebar (**20**).

3. The straddled vehicle **(1)** according to claim 1 or 2, wherein:
the meter **(30)** includes a display panel (**32**) that displays at least vehicle speed and a transparent panel **(33)** that covers the display panel (**32**);
as the vehicle is viewed from above, the insertion hole **(41)** of the accessory socket **(40)** is arranged rearward relative to a rear end **(33b)** of the transparent panel **(33)** and forward relative to the front end **(20f)** of the handlebar **(20).**

4. The straddled vehicle **(1)** according to any one of claims 1 to 3, wherein as the vehicle is viewed from above, a center **(41c)** of the insertion hole **(41)** of the accessory socket **(40)** is located on the vehicle center line **(CL).**

5. The straddled vehicle **(1)** according to any one of claims 1 to 4, wherein the insertion hole **(41)** of the accessory socket **(40)** has an opening facing rearward and upward.

6. The straddled vehicle **(1)** according to any one of claims 1 to 5, wherein on a vertical cross section that includes the center line **(L41c)** of the insertion hole **(41)** of the accessory socket **(40)**, an rearward extension line **(P1)** of the center line **(L41c)** of the insertion hole **(41)** passes upward of the handlebar **(20).**

7. The straddled vehicle **(1)** according to any one of claims 1 to 6, wherein:
as the vehicle is viewed from above, a rear edge **(30E)** of the meter **(30)** includes a depressed portion **(30EC)** that is depressed forward, a left portion **(30EL)** located leftward of the depressed portion (**30EC**), and a right portion **(30ER)** located rightward of the depressed portion (**30EC**); and
as the vehicle is viewed from above, at least a portion of the insertion hole **(41)** of the accessory socket **(40)** is arranged rearward of the depressed portion **(30EC)**, forward and rightward of the left portion (**30EL**), and forward and leftward of the right portion **(30ER).**

8. The straddled vehicle **(1)** according to claim 7, wherein:
the meter **(30)** includes a switch **(34)** arranged leftward or rightward of the depressed portion **(30EC)** as the vehicle is viewed from above; and
as the vehicle is viewed from above, a front end **(41f)** of the insertion hole **(41)** of the accessory socket **(40)** is located forward relative to a rear end **(34b)** of the switch (**34**), and a rear end **(41b)** of the insertion hole **(41)** of the accessory socket **(40)** is located rearward relative to a front end **(34f)** of the switch **(34).**

9. The straddled vehicle **(1)** according to any one of claims 1 to 8, comprising:
a stay **(25)** that is fixed to the steering shaft **(15)** and rotates left and right together with the steering shaft (**15**),
wherein the accessory socket **(40)** is attached to the stay **(25).**

10. The straddled vehicle **(1)** according to claim 9, wherein the meter **(30)** is attached to the stay **(25).**

## Patentansprüche

1. Spreizsitz-Fahrzeug (1), das umfasst:
einen-Karosserierahmen (10), der ein Steuerrohr (11) enthält;
eine Lenkwelle (15), die an dem Steuerrohr (11) so gelagert ist, dass sich die Lenkwelle (15) nach links und nach rechts drehen kann;
einen Lenker (20), der an der Lenkwelle (15) befestigt ist und sich nach links und nach rechts erstreckt;
einen Sitz (2), der hinter dem Lenker (20) angeordnet ist;
einen Kraftstofftank (6), der hinter dem Steuerrohr (11) angeordnet ist, wobei wenigstens ein Abschnitt desselben vor dem Sitz (2) und oberhalb desselben angeordnet ist;
eine Anzeige (30), die vor dem Lenker (20) angeordnet ist; sowie
eine Zubehör-Buchse (40), die ein Einführloch (41) enthält, das nach hinten gewandt ist, wobei:
die Anzeige (30) und die Zubehör-Buchse (40) so an der Lenkwelle (15) gelagert sind, dass sich die Anzeige (30) und die Zubehör-Buchse (40) zusammen mit dem Lenker (20) nach links und nach rechts drehen;
wenigstens ein Abschnitt der Zubehör-Buchse (40), bei Sicht auf das Fahrzeug von oben, relativ zu einem hinteren Ende (30b) der Anzeige (30) hinten liegend und relativ zu einem vorderen Ende (20f) des Lenkers (20) vorn liegend angeordnet ist, und
wobei das Spreizsitz-Fahrzeug (1) umfasst:
eine obere Brücke (16), die an der Lenkwelle (15) befestigt ist;
einen linken oberen Halter (18L), der links von einer Fahrzeug-Mittellinie (CL) angeordnet ist und die obere Brücke (16) und den Lenker (20) aneinander befestigt; sowie
einen rechten oberen Halter (18R), der rechts von der Fahrzeug-Mittellinie (CL) angeordnet ist und die obere Brücke (16) und den Lenker (20) aneinander befestigt; wobei
das Einführloch (41) der Zubehör-Buchse (40) rechts von dem linken oberen Halter (18L) und links vom dem rechten oberen Halter (18R) angeordnet ist;
**dadurch gekennzeichnet, dass** für eine Richtung einer Mittellinie (L41c) des Einführlochs (41) der Zubehör-Buchse (40) das Einführloch (41) relativ zu einem hinteren Ende (Q30b ) der Anzeige (30) in Richtung der Mittellinie (L41c) vor der Mittellinie (L41c) angeordnet ist.

2. Spreizsitz-Fahrzeug (1) nach Anspruch 1, wobei bei Sicht auf das Fahrzeug von oben wenigstens ein Abschnitt des Einführlochs (41) der Zubehör-Buchse (40) relativ zu dem hinteren Ende (30b) der Anzeige (30) hinten liegend und relativ zu dem vorderen Ende (20f)des Lenkers (20) vorn liegend angeordnet ist.

3. Spreizsitz-Fahrzeug (1) nach Anspruch 1 oder 2, wobei:
die Anzeige (30) ein Anzeigefeld (32), das wenigstens die Fahrzeuggeschwindigkeit anzeigt, und ein transparentes Feld (33) einschließt, das das Anzeigefeld (32) abdeckt;
das Einführloch (41) der Zubehör-Buchse (40), bei Sicht auf das Fahrzeug von oben, relativ zu einem hinteren Ende (33b) des transparenten Feldes (33) hinten liegend und relativ zu dem vorderen Ende (20f) des Lenkers (20) vorn liegend angeordnet ist.

4. Spreizsitz-Fahrzeug (1) nach einem der Ansprüche 1 bis 3, wobei sich ein Mittelpunkt (41c) des Einführlochs (41) der Zubehör-Buchse (40), bei Sicht auf das Fahrzeug von oben, auf der Fahrzeug-Mittellinie (CL) befindet.

5. Spreizsitz-Fahrzeug (1) nach einem der Ansprüche 1 bis 4, wobei das Einführloch (41) der Zubehör-Buchse (40) eine nach hinten und oben gerichtete Öffnung aufweist.

6. Spreizsitz-Fahrzeug (1) nach einem der Ansprüche 1 bis 5, wobei in einem vertikalen Querschnitt, der die Mittellinie (L41c) des Einführlochs (41) der Zubehör-Buchse (40) einschließt, eine hintere Verlängerungslinie (P1) der Mittellinie (L41c) des Einführlochs (41) oberhalb des Lenkers (20) verläuft.

7. Spreizsitz-Fahrzeug (1) nach einem der Ansprüche 1 bis 6, wobei:
eine Hinterkante (30E) der Anzeige (30), bei Sicht auf das Fahrzeug von oben, einen vertieften Abschnitt (30EC ), der nach vorn vertieft ist, einen linken Abschnitt (30EL), der sich links von dem vertieften Abschnitt (30EC) befindet, sowie einen rechten Abschnitt (30ER) einschließt, der sich rechts von dem vertieften Abschnitt (30EC) befindet; und
wenigstens ein Abschnitt des Einführlochs (41) der Zubehör-Buchse (40), bei Sicht auf das Fahrzeug von oben, hinter dem vertieften Abschnitt (30EC), vor und rechts von dem linken Abschnitt (30EL) sowie vor und links von dem rechten Abschnitt(30ER) angeordnet ist.

8. Spreizsitz-Fahrzeug (1) nach Anspruch 7, wobei:
die Anzeige (30) einen Schalter (34) enthält, der bei Sicht auf das Fahrzeug von oben, links oder rechts von dem vertieften Abschnitt (30EC) angeordnet ist; und
ein vorderes Ende (41f) des Einführlochs (41) der Zubehör-Buchse (40), bei Sicht auf das Fahrzeug von oben, relativ zu einem hinteren Ende (34b) des Schalters (34) vorn liegend angeordnet ist, und ein hinteres Ende (41b) des Einführlochs (41) der Zubehör-Buchse (40) relativ zu einem vorderen Ende (34f) des Schalters (34) hinten liegend angeordnet ist.

9. Spreizsitz-Fahrzeug (1) nach einem der Ansprüche 1 bis 8, das umfasst:
eine Strebe (25), die an der Lenkwelle (15) befestigt ist und sich zusammen mit der Lenkwelle (15) nach links und nach rechts dreht,
wobei die Zubehör-Buchse (40) an der Strebe (25) angebracht ist.

10. Spreizsitz-Fahrzeug (1) nach Anspruch 9, wobei die Anzeige (30) an der Strebe (25) angebracht ist.

## Revendications

1. Véhicule à enfourcher (1) comprenant :
un cadre (10) incluant une tête de fourche (11) ;
une colonne de direction (15) soutenue sur la tête de fourche (11) de sorte que la colonne de direction (15) puisse tourner vers la gauche et la droite ;
un guidon (20) fixé sur la colonne de direction (15) et s'étendant vers la gauche et vers la droite ;
une selle (2) disposée en arrière du guidon (20) ;
un réservoir de carburant (6) disposé en arrière de la tête de fourche (11) avec au moins une partie de celui-ci disposée en avant et au-dessus de la selle (2) ;
un compteur (30) disposé en avant du guidon (20) ; et
une prise pour accessoire (40) incluant un trou d'insertion (41) orienté vers l'arrière, dans lequel :
le compteur (30) et la prise pour accessoire (40) sont soutenus sur la colonne de direction (15) de sorte que le compteur (30) et la prise pour accessoire (40) tournent vers la gauche et la droite conjointement avec le guidon (20) ;
tandis que le véhicule est vu du dessus, au moins une partie de la prise pour accessoire (40) est disposée en arrière par rapport à une extrémité arrière (30b) du compteur (30) et en avant par rapport à une extrémité avant (20f) du guidon (20), et
le véhicule à enfourcher (1) comprend :
un pontet supérieur (16) fixé à la colonne de direction (15) ;
un support supérieur gauche (18L) disposé à gauche d'une ligne centrale de véhicule (CL) et fixant ensemble le pontet supérieur (16) et le guidon (20) ; et
un support supérieur droit (18R) disposé à droite de la ligne centrale de véhicule (CL) et fixant ensemble le pontet supérieur (16) et le guidon (20), dans lequel
le trou d'insertion (41) de la prise pour accessoire (40) est disposé à droite du support supérieur gauche (18L) et à gauche du support supérieur droit (18R) ;
**caractérisé en ce que**, pour une direction d'une ligne centrale (L41c) du trou d'insertion (41) de la prise pour accessoire (40), le trou d'insertion (41) est disposé en avant dans une direction de la ligne centrale (L41c) par rapport à une extrémité arrière (Q30b) du compteur (30) dans la direction de ligne centrale (L41c).

2. Le véhicule à enfourcher (1) selon la revendication 1, dans lequel tandis que le véhicule est vu du dessus, au moins une partie du trou d'insertion (41) de la prise pour accessoire (40) est disposée en arrière par rapport à l'extrémité arrière (30b) du compteur (30) et en avant par rapport à l'extrémité avant (20f) du guidon (20).

3. Le véhicule à enfourcher (1) selon la revendication 1 ou 2, dans lequel :
le compteur (30) inclut un panneau d'affichage (32) qui affiche au moins une vitesse de véhicule et un panneau transparent (33) qui couvre le panneau d'affichage (32) ;
tandis que le véhicule est vu du dessus, le trou d'insertion (41) de la prise pour accessoire (40) est disposé en arrière par rapport à une extrémité arrière (33b) du panneau transparent (33) et en avant par rapport à une extrémité avant (20f) du guidon (20).

4. Le véhicule à enfourcher (1) selon l'une quelconque des revendications 1 à 3, dans lequel tandis que le véhicule est vu du dessus, un centre (41c) du trou d'insertion (41) de la prise pour accessoire (40) est situé sur la ligne centrale de véhicule.

5. Le véhicule à enfourcher (1) selon l'une quelconque des revendications 1 à 4, dans lequel le trou d'insertion (41) de la prise pour accessoire (40) présente une ouverture orientée vers l'arrière et vers le haut.

6. Le véhicule à enfourcher (1) selon l'une quelconque des revendications 1 à 5, dans lequel sur une section transverse verticale qui inclut la ligne centrale (L41c) du trou d'insertion (41) de la prise pour accessoire (40), une ligne d'extension vers l'arrière (P1) de la ligne centrale (L41c) du trou d'insertion (41) passe au-dessus du guidon (20).

7. Le véhicule à enfourcher (1) selon l'une quelconque des revendications 1 à 6, dans lequel :
tandis que le véhicule est vu du dessus, une arête arrière (30E) du compteur (30) inclut une partie en creux (30EC) qui est en creux vers l'avant, une partie gauche (30EL) située à gauche de la partie en creux (30EC), et une partie droite (30ER) située à droite de la partie en creux (30EC) ; et
tandis que le véhicule est vu du dessus, au moins une partie du trou d'insertion (41) de la prise pour accessoire (40) est disposée en arrière de la partie en creux (30EC), en avant et à droite de la partie gauche (30EL), et en avant et à gauche de la partie droite (30ER).

8. Le véhicule à enfourcher (1) selon la revendication 7, dans lequel :
le compteur (30) inclut un commutateur (34) disposé à gauche ou à droite de la partie en creux (30EC) tandis que le véhicule est vu du dessus ; et
tandis que le véhicule est vu du dessus, une extrémité avant (41f) du trou d'insertion (41) de la prise pour accessoire (40) est située en avant par rapport à une extrémité arrière (34b) du commutateur (34), et une extrémité arrière (41b) du trou d'insertion (41) de la prise pour accessoire (40) est située en arrière par rapport à une extrémité avant (34f) du commutateur (34).

9. Le véhicule à enfourcher (1) selon l'une quelconque des revendications 1 à 8, comprenant :
un support (25) qui est fixé à la colonne de direction (15) et tourne vers la gauche et la droite conjointement avec la colonne de direction (15),
dans lequel la prise pour accessoire (40) est fixée au support (25) .

10. Le véhicule à enfourcher (1) selon la revendication 9, dans lequel le compteur (30) est rattaché au support (25) .
